# EUROPÄISCHE PATENTANMELDUNG

(11) **EP 1 486 709 A1**
(43) Veröffentlichungstag der Anmeldung: **15.12.2004**
(21) Anmeldenummer: 04013135.1
(22) Anmeldetag: 03.06.2004
(51) Int. Cl.: F16K 27/10, F16K 27/00

(54) **Ventilgehäuse für ein Kleinventil**

(30) Priorität: 10.06.2003 DE 20308972 U
(71) Anmelder: Bürkert Werke GmbH & Co. KG, 74653 Ingelfingen (DE)
(72) Erfinder: Neumann, Walter, 74635 Kupferzell (DE)
(74) Vertreter: Degwert, Hartmut, Dipl.-Phys.

(57) **Zusammenfassung**

Ventilgehäuse (10) für ein Kleinventil, wobei das Ventilgehäuse (10) aus einem ebenen Blech gestanzt und anschließend geformt und geschweißt ist und wobei das Ventilgehäuse als Basiselement für verschiedene Ventiltypen dient.

## Beschreibung

Die Erfindung betrifft ein Ventilgehäuse für ein Kleinventil.

Bekannte Ventilkörper aus Metall werden bisher weitgehend durch Gießen von Stahl oder Aluminium sowie durch Fräsen von Messing oder Schmieden von Ventilrohlingen aus Stahl sowie als Warmpreßteile oder aus Druckguß hergestellt. Als nachteilig hat sich bei diesen Ventilen herausgestellt, daß diese gegossenen, geschmiedeten oder gepreßten Ventilkörper ein sehr hohes Gewicht aufweisen. Ein weiterer Nachteil dieser herkömmlichen Ventile besteht darin, daß die genannten Umformtechniken mit hohen Kosten verbunden sind und sehr viel Energie verbrauchen. Darüber hinaus entstehen durch die Umformtechniken rauhe Oberflächen, die für viele Anwendungsfälle nachgearbeitet werden müssen, so daß dadurch weitere Kosten entstehen. Als nachteilig hat sich bei den herkömmlichen gegossenen Ventilen auch herausgestellt, daß beim Gießen Lunker entstehen können, die nur durch aufwendige Qualitätskontrollen auszusondern sind bzw. bei Nichterkennen zu Fehlfunktionen führen können. Ventile, die mit dem oben genannten Verfahren hergestellt sind, haben den weiteren Nachteil, daß der Größe der Ventile nach unten hin Grenzen gesetzt sind. Herkömmliche Kleinventile werden deshalb vor allem aus Kunststoff hergestellt. Nachteilig bei diesen Kunststoffventilen ist die geringe Einsatzbandbreite und die schnelle Alterung des Materials, darüber hinaus sind sie nicht für alle Medien geeignet. Des weiteren ist der Gebrauch von Kunststoffventilen in der Lebensmitteltechnik und bei sterilen Arbeitsgängen begrenzt.

Steigende Ansprüche an die Qualität und die Forderung nach kostengünstiger Herstellung sowie der erhöhte Bedarf an kleineren Ventilen lassen den Wunsch aufkommen, ein Ventilgehäuse für ein Kleinventil und ein Kleinventil herzustellen, bei dem durch intelligenten Werkstoffeinsatz und die Anwendung eines rationellen Fertigungsverfahrens die oben genannten Nachteile entfallen.

Ausgehend von diesen Forderungen liegt der Erfindung die Aufgabe zugrunde, ein metallisches Ventilgehäuse für ein Kleinventil und ein Kleinventil zu entwickeln, das einen minimalen Materialeinsatz erfordert und mit reduzierten Herstellungskosten gefertigt werden kann. Das Ventilgehäuse soll bei einer Eignung für verschiedene Arten von Ventilen und einer durchdachten Strömungsführung mit einer geringen Zahl von Arbeitsgängen die Basis für einen universellen, modularen Ventilaufbau gewährleisten. Konzeptionell wird zudem eine Vielzahl von Anschlußarten wie z. B. Gewinde, Muffen, Schnellverschlußkupplung oder Flanschverbindung gefordert.

Die Erfindung strebt somit danach, herkömmliche Ventile dahingehend zu verbessern, daß sie kostengünstig und in kürzester Zeit in hohen Stückzahlen herstellbar sind, gleichzeitig eine hohe Zuverlässigkeit garantieren und die Forderung nach Gewichtsreduzierung erfüllen. Zur Lösung des Problems geht die Erfindung von den bereits gefertigten, eingangs beschriebenen konventionellen Ventilen aus und schlägt zur Reduzierung von Material und Bearbeitungskosten eine Konstruktion aus Blech vor.

Das angestrebte Ziel wird erfindungsgemäß durch ein Ventilgehäuse für ein Kleinventil mit den Merkmalen des Patentanspruches 1 erreicht. Dieses Ventilgehäuse kann als Stanzbiegeteil oder als Tiefziehteil hergestellt werden. Diese Herstellung kann insbesondere bei hohen Stückzahlen, hochgradig automatisiert werden.

Das erfindungsgemäße Ventilgehäuse für ein Kleinventil gestattet es in einfacher Weise zum einen die bekannten aufwendigen Fertigungsverfahren nicht mehr einzusetzen; zum anderen erlaubt die Erfindung eine Vielzahl von Ausgestaltungen, die an die jeweiligen Anforderungen genau anpaßbar sind. Das Ventilgehäuse kann als Basiselement für verschiedene Ventiltypen dienen. Ein weiterer Vorteil des erfindungsgemäßen Ventilgehäuses ist die kostengünstige Realisierung serieller Fertigungsmethoden sowie die einfache Umbaubarkeit der Fertigungsmaschinen bei geänderten Anforderungen und Neuentwicklungen. Die auf diese Weise hergestellten Kleinventile zeichnen sich darüber hinaus durch ihre kompakte Bauweise und durch ihr geringes Gewicht aus.

Alle Variationen der erfindungsgemäßen Ventilgehäuse und Kleinventile werden den steigenden Anforderungen der Kunden an Qualität und Wirtschaftlichkeit von Kleinventilen gerecht. Zum Beispiel ist damit das Ventilgehäuse auch in Einsatzgebieten verwendbar, bei denen Kleinventile aus Edelstahl erforderlich sind. In korrosionsbeständiger Ausführung verfügt das erfindungsgemäße Ventilgehäuse über eine hohe Resistenz gegenüber den unterschiedlichsten Fördermedien und ist durch die erreichte Oberflächengüte und gleichmäßige Wandung bestens geeignet.

Das erfindungsgemäße Kleinventil ist für unterschiedliche Fördermedien geeignet. Insbesondere ist es auch im technischen Vakuum einsetzbar. Das Kleinventil kann als Einzelventil eingesetzt werden, aber es ist auch möglich, mehrere dieser Ventile zu einem Block zu verbinden. Die erfindungsgemäße Kleinventile sind in beliebiger Einbaulage verwendbar.

Die Kombinationsvielfalt des erfindungsgemäßen Ventilgehäuses ermöglicht ein breites Spektrum von Einsatzmöglichkeiten in denen kostengünstige Ventile gefordert sind, so kann in nicht näher dargestellten Weise auch vorgesehen werden, daß Ventile mit dem Ventilgehäuse in blockverschraubter und zentralverschraubter Ausführung hergestellt wird.

Das erfindungsgemäße Ventilgehäuse kann in allen Ventiltypen für strömungsführende Medien eingesetzt werden.

In einer bevorzugten Ausführungsform wird ein rechteckiges Ventilgehäuse durch Biegen geformt. Um saubere Biegekanten zu erhalten, werden beim Stanzen des Ventilgehäuses aus ebenem Blech Perforationen entlang der Biegekanten ausgestanzt. Nach dem Biegen wird das Ventilgehäuse an den Kanten punktuell verschweißt, in einem weiteren Arbeitsgang wird ein Innenteil, bestehend beispielsweise aus einem ausgangsseitigen und einem eingangsseitigen Topf als Anschlüsse für die strömenden Medien angeordnet und mit dem Gehäuse zum Beispiel durch Schweißen verbunden.

Eine weitere vorteilhafte Ausgestaltung des Ventilgehäuses vergrößert den Gestaltungsspielraum hinsichtlich der für das Blechgehäuse möglichen Einsatzgebiete dadurch, daß das Ventilgehäuse und die ein- und ausgangseitigen Töpfe als Tiefziehteil herstellbar sind.

In einer bevorzugten Ausführungsform umfaßt das Ventilgehäuse einen Ventilsitz. Dieser Ventilsitz kann in das Ventilgehäuse eingeschweißt werden. In einer weiteren Ausführungsform ist es auch möglich, den Ventilsitz einzupressen. Ebenso ist es denkbar, den Ventilsitz anzuprägen.

Zum Anschluß des Ventilgehäuses nach außen sind Ein- und Ausgangsanschlüsse vorgesehen. Diese Anschlüsse können als Muffenanschlüsse, Gewindeanschlüsse oder aber als Flanschverbindungen ausgeführt sein.

Das Ventilgehäuse eignet sich als modularer Baustein für den Einsatz in einer Vielzahl von Kleinventilen. So kann das Ventilgehäuse in einem Kleinventil eingesetzt werden, das als Ventil in Kartuschenform ausgeführt ist. Dieses Kleinventil eignet sich in vorteilhafter Weise zum Einsatz in Verteilergehäusen bzw. Schalttafeln oder Schaltschränken.

Weiter kann das Ventilgehäuse in einem rechteckigen Kleinventil eingesetzt werden, das als Wippenventil ausgestaltet ist. Vorzugsweise hat dieses als Wippenventil ausgestaltete Kleinventil Flanschanschlüsse.

Weitere Ausführungsformen von Kleinventilen, in denen ein Einsatz des Ventilgehäuses möglich ist, umfassen z.B. ein Durchgangsventil, ein Eckventil, ein Kartuschenventil oder auch ein Mischventil.

Ausführungsbeispiele der Erfindung sind nachstehend anhand der Zeichnungen näher erläutert. Es zeigt
Fig. 1 den Zuschnitt des Gehäuses in einer ersten Ausführung als gestanzte Platine für eine quadratische Ventilgehäuseform,
Fig. 2 eine perspektivische Darstellung des Gehäuses in einer ersten Ausführung als quadratischer Ventilkörper,
Fig. 3 das Gehäuse nach der Verformung der Platine zum Ventil in der Draufsicht,
Fig. 4 Ansicht von unten auf ein quadratisches Gehäuse,
Fig. 5 eine schematische Schnittdarstellung eines quadratischen Grundkörpers wie in Fig. 3 gezeigt,
Fig. 6 das Ventilgehäuse in einer Draufsicht als rundes Tiefziehgehäuse,
Fig. 7 die schematische Längsschnittdarstellung in der Ausführung des runden Grundkörpers,
Fig. 8 eine weitere schematische Längsschnittdarstellung eines runden Ventilkörpers, mit angeprägtem Ventilsitz,
Fig. 9 in einer weiteren Ausführungsmöglichkeit als rundes Tiefziehgehäuse in der Draufsicht,
Fig. 10 den Längsschnitt durch ein tiefgezogenes Ventilgehäuse wie Fig. 9,
Fig. 11 die isometrische Gehäuseansicht der in Fig. 9 und 10 dargestellten Ausführung,
Fig. 12 ein Kleinventil als komplette Armatur,
Fig. 13 ein weiteres Kleinventil als komplette Armatur,
Fig. 14 in einem weiteren Beispiel der Einsatzmöglichkeiten ein Kleinventil als komplette Armatur.

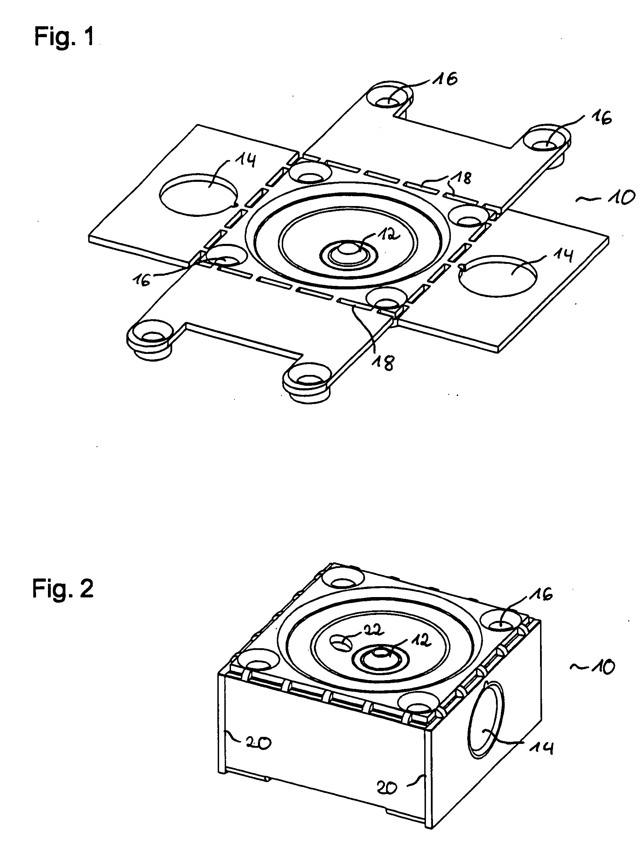

In Figur 1 ist der Zuschnitt eines Ventilgehäuses 10 als gestanzte Platine dargestellt, wobei der Ventilsitz 12 durch Tiefziehen des Blechteils erzeugt ist und Aussparungen 14 für Anschlüsse und Aussparungen 16 für Schraublöcher ausgestanzt sind. Um genau vorgegebene Biegekanten zu erhalten, sind entlang der Kanten Perforierungen 18 gestanzt.

Figur 2 zeigt das Ventilgehäuse 10 nach der Formung durch Biegen, wobei die offenen Kanten 20 z. B. durch Schweißen verbunden sind. Erkennbar ist hier auch eine Entlüftungsöffnung 22. Die Biegekanten laufen genau entlang der Perforierungen 18.

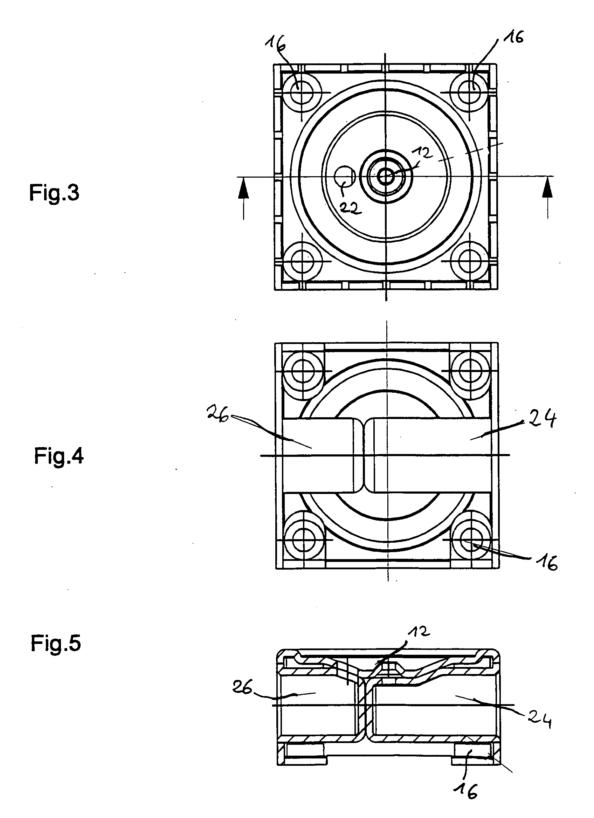

Figur 3 zeigt das Ventilgehäuse 10 aus Figur 2. Zu sehen ist in der Mitte der Ventilsitz 12 und die Entlüftungsöffnung 22. Ebenfalls erkennbar in der Draufsicht sind die Aussparungen für Schraublöcher 16.

In Figur 4 ist eine Ansicht von unten auf das Ventilgehäuse der Figur 3 dargestellt. In einem weiteren Arbeitsschritt ist ein Innenteil eingebracht worden. Dies besteht aus einem Eingangstopf 24 für den Eingangsanschluß und einem Ausgangstopf 26 für den Ausgangsanschluß. Diese Töpfe können als Tiefziehteile hergestellt sein und mit dem Gehäuse durch Schweißen, Kleben oder einem anderen verbindenden Verfahren verbunden sein. In dieser Ausführungsform dient das Ventilgehäuse 10 für ein 2/2-Wege-Ventil. In den Aussparungen 16 für Schraublöcher sind Gehäusebefestigungsgewinde zu erkennen.

Figur 5 zeigt eine schematische Schnittdarstellung des Ventilgehäuses mit Innenteil der Figur 4. Zu erkennen sind der Ventilsitz 12, der Eingangstopf 24 und der Ausgangstopf 26, sowie die Gehäusebefestigungsgewinde in den Aussparungen 16 für Schraublöcher.

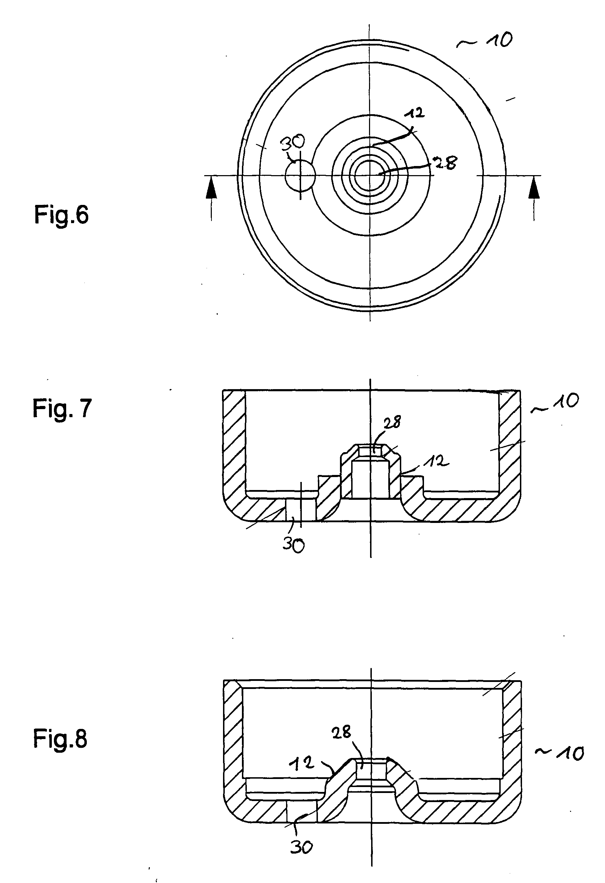

Figur 6 zeigt die Draufsicht auf ein Ventilgehäuse 10 in einer zweiten bevorzugten Ausführungsform als rundes Tiefziehteil. Zu erkennen ist in Figur 6 der Ventilsitz 12, eine Eingangsbohrung 28 und eine Ausgangsbohrung 30.

Figur 7 zeigt eine schematische Längsschnittdarstellung durch ein rundes Ventilgehäuse, wobei der Ventilsitz 12 als separates Teil gefertigt wurde und in einem weiteren Arbeitsschritt in das Gehäuse eingepreßt ist.

In der Längsschnittdarstellung der Figur 8 durch ein weiteres rundes Ventilgehäuse ist der Ventilsitz 12 einstückig mit dem Gehäuse ausgeführt. Sowohl in Figur 7 als auch in Figur 8 erkennt man neben dem Ventilsitz 12 die Eingangsbohrung 28 und die Ausgangsbohrung 30.

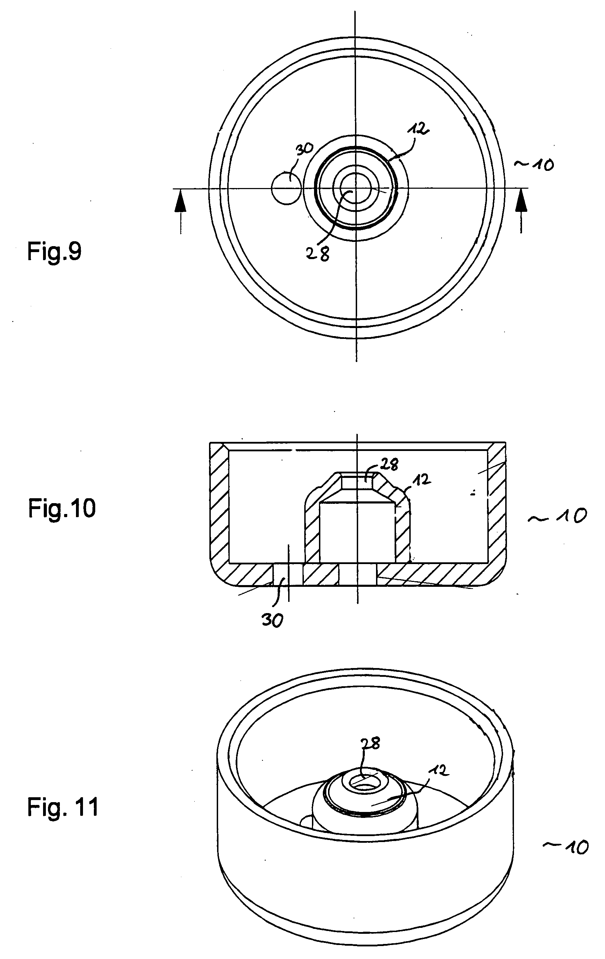

Die Figuren 9, 10 und 11 zeigen eine weitere Ausführungsform eines runden Ventilgehäuses10. Figur 9 zeigt das Tiefziehgehäuse in einer Draufsicht, wobei der Ventilsitz 12, die Eingangsbohrung 28, und die Ausgangsbohrung 30 zu erkennen sind. Figur 10 zeigt einen schematischen Querschnitt durch das Ventilgehäuse von Figur 9. Der Ventilsitz 12 ist in das runde Ventilgehäuse 10 eingeschweißt. Figur 11 zeigt eine perspektivische Darstellung des Ventilgehäuses 10. Diese Ventilgehäuse 10 können modular in verschiedenen Ventilen eingesetzt werden.

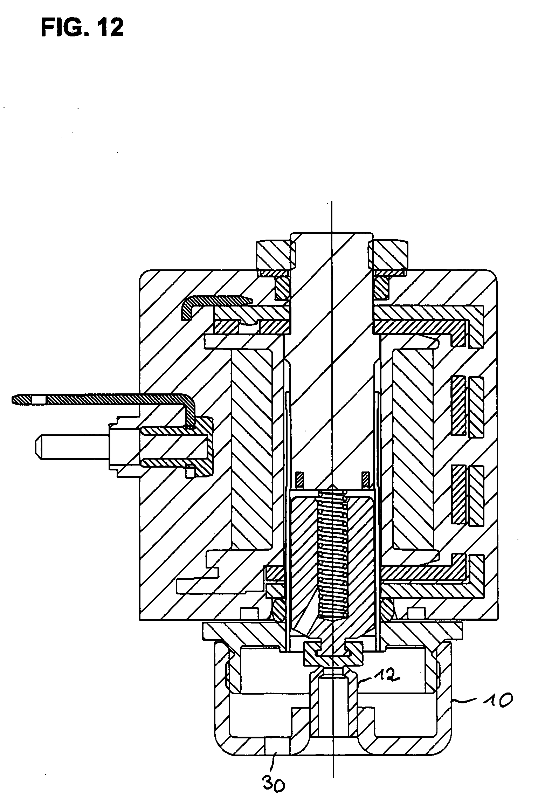

In Figur 12 ist ein 2/2-Wege-Ventil mit einem Ventilgehäuse nach Figur 7 dargestellt. In diesem Ventilgehäuse ist der Ventilsitz 12 eingepreßt. Die Betätigung des Ventils erfolgt mittels einer Magnetspule 32. Das in Figur 12 dargestellte Kleinventil ist in zentralverschraubter Ausführung.

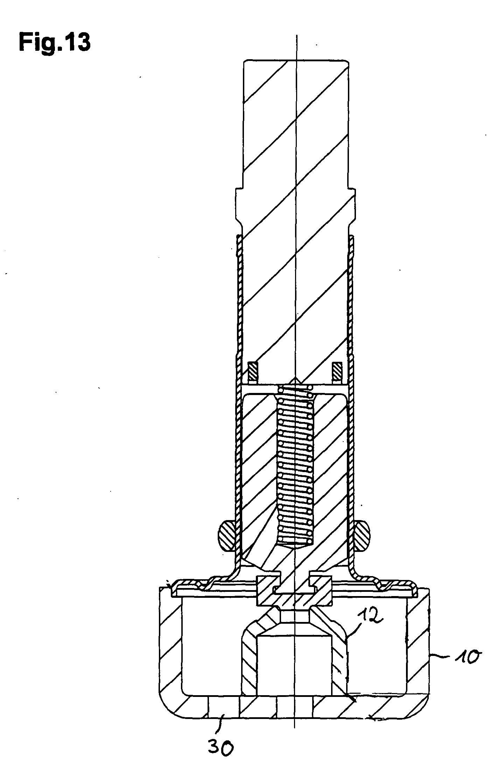

In dem Kleinventil nach Figur 13 ist ein Ventilgehäuse nach Figur 10 eingebaut. Auch dieses Ventil hat einen Magnetantrieb mit einer Magnetspule 32. Im Gegensatz zu dem Kleinventil aus Figur 12 ist der Ventilsitz 12 in das Gehäuse 10 eingeschweißt. Ebenso ist das Ventilgehäuse 10 mit dem restlichen Kleinventil durch eine Schweißnaht verbunden.

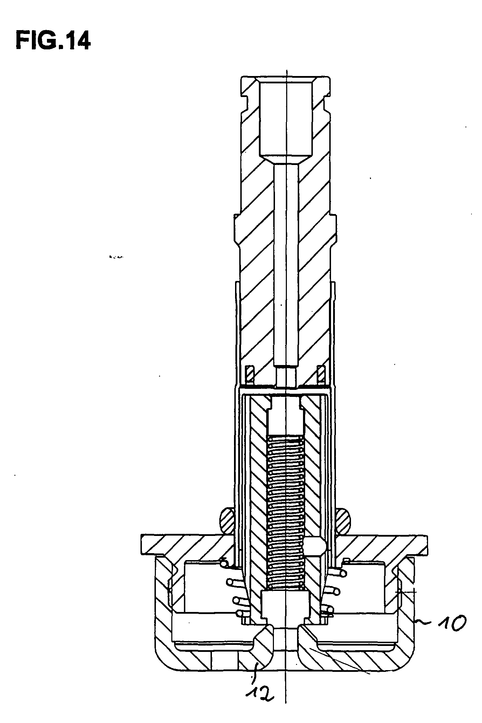

Im Kleinventil nach Figur 14 ist ein Ventilgehäuse 10 wiederum mit dem restlichen Kleinventil verschraubt. In diesem Kleinventil findet ein Ventilgehäuse nach Figur 8 Einsatz. Das Ventilgehäuse hat einen angeprägten Ventilsitz. Der Ventilantrieb erfolgt wiederum magnetisch mit einer Magnetspule 32.

## Patentansprüche

1. Ventilgehäuse für ein Kleinventil, wobei das Ventilgehäuse (10) aus einem ebenen Blech gestanzt und anschließend geformt und geschweißt ist und wobei das Ventilgehäuse (10) als Basiselement für verschiedene Ventiltypen dient.

2. Ventilgehäuse nach Anspruch 1, wobei das Ventilgehäuse (10) durch Biegen geformt ist.

3. Ventilgehäuse nach Anspruch 1, wobei Perforationen (18) entlang der Biegekanten ausgestanzt werden.

4. Ventilgehäuse nach Anspruch 1, wobei das Ventilgehäuse (10) durch Tiefziehen geformt ist.

5. Ventilgehäuse nach Anspruch 4, wobei das Ventilgehäuse (10) rund ist.

6. Ventilgehäuse nach einem der Ansprüchen 1 bis 3, wobei das Ventilgehäuse (10) rechteckig ist.

7. Ventilgehäuse nach einem der Ansprüche 1 bis 6, wobei das Ventil korrosionsbeständig aus Edelstahl hergestellt ist.

8. Ventilgehäuse nach einem der Ansprüche 1 bis 7, wobei das Ventilgehäuse (10) einen Ventilsitz (12) umfaßt.

9. Ventilgehäuse nach Anspruch 8, wobei der Ventilsitz (12) eingeschweißt ist.

10. Ventilgehäuse nach Anspruch 8, wobei der Ventilsitz (12) eingepreßt ist.

11. Ventilgehäuse nach Anspruch 8, wobei der Ventilsitz (12) angeprägt ist

12. Ventilgehäuse nach einem der vorangegangenen Ansprüche, wobei das Ventilgehäuse ein Innenteil (24, 26) umfaßt.

13. Ventilgehäuse nach Anspruch 12, wobei das Innenteil (24, 26) durch Schweißen, Kleben, oder einem anderen verbindenden Verfahren mit dem Gehäuse zu einem Ventilkörper verbunden ist.

14. Ventilgehäuse für ein Kleinventil nach einem der vorangegangenen Ansprüche, wobei das Ventilgehäuse mit Muffenanschlüssen ausgeführt ist.

15. Ventilgehäuse für ein Kleinventil nach einem der vorangegangenen Ansprüche, wobei das Ventilgehäuse mit Gewindeanschlüssen ausgeführt ist.

16. Ventilgehäuse für ein Kleinventil nach einem der vorangegangenen Ansprüche, wobei das Ventilgehäuse mit Flanschverbindungen ausgeführt ist.

17. Kleinventil mit einem Ventilgehäuse nach einem der vorangegangenen Ansprüche, wobei das Ventilgehäuse an das Kleinventil angeschraubt ist.

18. Kleinventil mit einem Ventilgehäuse nach einem der vorangegangenen Ansprüche, wobei das Ventilgehäuse an das Kleinventil angeschweißt ist.

19. Kleinventil mit einem Ventilgehäuse nach einem der Ansprüche 1 bis 16, wobei das Ventil ein Eckventil ist.

20. Kleinventil mit einem Ventilgehäuse nach einem der Ansprüche 1 bis 16, wobei das Ventil ein Durchgangsventil ist.

21. Kleinventil mit einem Ventilgehäuse nach einem der Ansprüche 1 bis 16, wobei das Ventil ein Kartuschenventil ist.

22. Kleinventil mit einem Ventilgehäuse nach einem der Ansprüche 1 bis 16, wobei das Ventil ein Wippenventil ist.

23. Kleinventil mit einem Ventilgehäuse nach einem der Ansprüche 1 bis 16, wobei das Ventil ein 2/2-Wege-Ventil ist.

24. Kleinventil mit einem Ventilgehäuse nach einem der Ansprüche 1 bis 16, wobei das Ventil ein Mehrwegeventil ist.

25. Kleinventil mit einem Ventilgehäuse nach einem der Ansprüche 1 bis 16, wobei das Ventil ein Mischventil ist.

26. Kleinventil mit einem Ventilgehäuse nach einem der Ansprüche 1 bis 16, wobei das Ventil ein Verteilerventil ist.

27. Kleinventil mit einem Ventilgehäuse nach einem der Ansprüche 1 bis 16, wobei das Kleinventil im technischen Vakuum einsetzbar ist.
